# EUROPEAN PATENT APPLICATION

(11) **EP 4 353 539 A1**
(43) Date of publication of application: **17.04.2024**
(21) Application number: 22943569.8
(22) Date of filing: 14.12.2022
(51) Int. Cl.: B60R 1/00

(54) **CALIBRATION METHOD AND APPARATUS**

(30) Priority: 23.05.2022 CN 202210565523
(71) Applicant: Huawei Technologies Co., Ltd., Longgang Shenzhen, Guangdong 518129 (CN)
(72) Inventor: ZHA, Jingfang, Shenzhen, Guangdong 518129 (CN); LIU, Yang, Shenzhen, Guangdong 518129 (CN); TANG, Qiuyuan, Shenzhen, Guangdong 518129 (CN); LI, Teng, Shenzhen, Guangdong 518129 (CN)
(74) Representative: MERH-IP Matias Erny Reichl Hoffmann Patentanwälte PartG mbB
(86) International application number: PCT/CN2022/139037
(87) International publication number: WO 2023/226382

(57) **Abstract**

Embodiments of this application provide a calibration method and apparatus. The method includes: sending identification information of a vehicle to a first server; receiving first motion track information sent by the first server based on the identification information, where the first motion track information includes motion track information of a mechanical arm for calibration of a first to-be-calibrated device in the vehicle; and controlling, based on the first motion track information, the mechanical arm to calibrate the first to-be-calibrated device. The technical solutions in embodiments of this application may be applied to calibration of an intelligent vehicle or an electric vehicle. This helps improve intelligence of calibrating a to-be-calibrated device in a vehicle, thereby helping improve calibration efficiency.

## Description

This application claims priority to Chinese Patent Application No. 202210565523.5, filed with the China National Intellectual Property Administration on May 23, 2022 and entitled "CALIBRATION METHOD AND APPARATUS", which is incorporated herein by reference in its entirety.

### TECHNICAL FIELD

Embodiments of this application relate to the field of calibration technologies, and more specifically, to a calibration method and apparatus.

### BACKGROUND

Different features or functions of a cabin of a vehicle are established in different coordinate systems. If devices in different coordinate systems need to interact with each other, calibration needs to be performed. For example, a visual perception feature (for example, image data collected by a camera) in the cabin is established in a camera coordinate system, and another device (for example, a head-up display) in the vehicle relies on a vehicle coordinate system. In consideration of multi-modal fusion between vision and other perceptions, it is necessary to establish a conversion relationship between the camera coordinate system and the vehicle coordinate system. To establish the relationship between the camera coordinate system and the vehicle coordinate system, calibration needs to be performed. Currently, manual intervention is needed in a calibration process of a device in the vehicle, and the calibration process is not intelligent, resulting in low calibration efficiency.

### SUMMARY

Embodiments of this application provide a calibration method and apparatus, to help improve intelligence of calibrating a to-be-calibrated device in a vehicle, thereby helping improve calibration efficiency.

According to a first aspect, a calibration method is provided. The method includes: sending identification information of a vehicle to a first server; receiving first motion track information sent by the first server based on the identification information, where the first motion track information includes motion track information of a mechanical arm for calibration of a first to-be-calibrated device in the vehicle; and controlling, based on the first motion track information, the mechanical arm to calibrate the first to-be-calibrated device.

In this embodiment of this application, during calibration of the first to-be-calibrated device in the vehicle, a calibration apparatus (for example, an industrial computer) may send the identification information of the vehicle to the first server, and control, based on the first motion track information sent by the first server, the mechanical arm to calibrate the first to-be-calibrated device. This replaces a manner of obtaining a motion track of the mechanical arm through a plurality of manual placements and attempts, so that the mechanical arm automatically and quickly moves to a target position. This helps reduce labor and trial-and-error costs and improve intelligence during device calibration, thereby helping improve calibration efficiency.

In some possible implementations, the sending identification information of a vehicle to a first server includes: sending the identification information of the vehicle and identification information of the first to-be-calibrated device to the first server.

In some possible implementations, the sending identification information of a vehicle to a first server includes: sending the identification information to the first server by using the vehicle.

In some possible implementations, the calibration apparatus may send the identification information to the vehicle. After receiving the identification information, the vehicle may send the identification information and the identification information of the first to-be-calibrated device to the first server. After receiving the identification information of the vehicle and the identification information of the first to-be-calibrated device, the first server may send the first motion track information to the vehicle, so that the vehicle may send the first motion track information to the calibration apparatus.

In some possible implementations, the first motion track information may include motion track information of the mechanical arm for calibration of each of a plurality of to-be-calibrated devices in the vehicle. In this way, after calibration of the first to-be-calibrated device is completed, the calibration apparatus may continue to calibrate another to-be-calibrated device based on the first motion track information.

In some possible implementations, the first server may be a physical server, or may be a virtual server.

With reference to the first aspect, in some implementations of the first aspect, the method further includes: receiving second motion track information sent by the first server when calibration of the first to-be-calibrated device is completed, where the second motion track information includes motion track information of the mechanical arm for calibration of a second to-be-calibrated device in the vehicle; and controlling, based on the second motion track information, the mechanical arm to calibrate the second to-be-calibrated device.

In this embodiment of this application, when calibration of the first to-be-calibrated device is completed, the calibration apparatus may control, based on the second motion track information sent by the first server, the mechanical arm to calibrate the second to-be-calibrated device. In this way, when calibration of the first to-be-calibrated device is completed, the second to-be-calibrated device is calibrated without a manual control or a manual operation. This helps reduce labor costs and improve intelligence during device calibration, thereby helping improve calibration efficiency.

In some possible implementations, the receiving second motion track information sent by the first server when calibration of the first to-be-calibrated device is completed includes: when calibration of the first to-be-calibrated device is completed, sending identification information of the vehicle and identification information of the second to-be-calibrated device to the first server; and receiving the second motion track information sent by the first server based on the identification information of the vehicle and the identification information of the second to-be-calibrated device.

In some possible implementations, when the calibration apparatus completes calibration of the first to-be-calibrated device, the calibration apparatus may send the identification information to the vehicle. After receiving the identification information, the vehicle may send the identification information and the identification information of the second to-be-calibrated device to the first server. After receiving the identification information of the vehicle and the identification information of the second to-be-calibrated device, the first server may send the second motion track information to the vehicle. In this way, the vehicle may send the second motion track information to the calibration apparatus.

With reference to the first aspect, in some implementations of the first aspect, the method further includes: controlling the vehicle to travel to a first work station, where the first work station is a work station at which the first to-be-calibrated device is calibrated.

In this embodiment of this application, different work stations may also be understood as different positions. A plurality of different calibration apparatuses may be disposed at a same work station, or a plurality of different calibration apparatuses or a plurality of same calibration apparatuses may be disposed at different work stations. This is not limited in this application. The calibration apparatus may control, by using an automatic driving capability of the vehicle, the vehicle to travel to the first work station, so that the vehicle does not need to be manually driven to the first work station. This helps reduce labor and time costs and improve intelligence during device calibration, thereby helping improve calibration efficiency.

In some possible implementations, the calibration apparatus may plan, for the vehicle, traveling track information from a current position of the vehicle to the first work station. The calibration apparatus may send the traveling track information to the vehicle, so that the vehicle travels from the current position to the first work station based on the traveling track information.

With reference to the first aspect, in some implementations of the first aspect, the method further includes: sending information about a plurality of to-be-calibrated devices to a second server, where the plurality of to-be-calibrated devices include the first to-be-calibrated device; and receiving traveling track information sent by the second server, where the traveling track information includes track information for traveling of the vehicle between a plurality of work stations, and the plurality of work stations include the first work station. The controlling the vehicle to travel to a first work station includes: controlling, based on the traveling track information, the vehicle to travel to the first work station.

In this embodiment of this application, when there are a plurality of to-be-calibrated devices in the vehicle and the plurality of to-be-calibrated devices need to be calibrated at different work stations, the calibration apparatus may send information about the plurality of to-be-calibrated devices to the second server. In this way, the second server may automatically plan, by using a path planning algorithm, a sequence of calibrating the plurality of to-be-calibrated devices and a motion track for traveling of the vehicle between work stations, without manual task planning. This helps reduce labor costs and improve efficiency of running of the vehicle between the plurality of work stations, thereby helping improve calibration efficiency.

In some possible implementations, the traveling track information includes track information for traveling of the vehicle with a shortest distance between the plurality of work stations. In this way, a vehicle calibration speed can be improved, and calibration efficiency can be improved.

In some possible implementations, the traveling track information includes track information for traveling of the vehicle with fewest conflicts between the plurality of work stations. In this way, a conflict between a traveling route and a calibration route in a multi-vehicle calibration process can be reduced, and system running efficiency can be improved.

In some possible implementations, the plurality of work stations include a second work station, and the second work station is a work station at which the second to-be-calibrated device is calibrated. The method further includes: determining, based on the traveling track information, that a next to-be-calibrated device after the first to-be-calibrated device is the second to-be-calibrated device; and when calibration of the first to-be-calibrated device is completed, controlling the vehicle to travel from the first work station to the second work station.

In some possible implementations, the second server and the first server may be a same server, or may be different servers.

In some possible implementations, the second server may be a physical server, or may be a virtual server.

With reference to the first aspect, in some implementations of the first aspect, the first to-be-calibrated device includes a camera, a head-up display, or a radar.

With reference to the first aspect, in some implementations of the first aspect, the method further includes: handling an exception when the exception occurs in a process of calibrating the first to-be-calibrated device.

In this embodiment of this application, when the exception occurs in the process of calibrating the first to-be-calibrated device, the calibration apparatus may automatically process the exception. In this way, the exception does not need to be manually resolved when the exception occurs, and the calibration apparatus can automatically resolve the exception. This helps reduce labor costs and improve intelligence during device calibration, thereby helping improve calibration efficiency.

With reference to the first aspect, in some implementations of the first aspect, the first to-be-calibrated device is the camera, a calibration board is disposed at an end of the mechanical arm, image information collected by the camera when the mechanical arm is at a first calibration position is first image information, the first motion track information includes the first calibration position, and the handling an exception when the exception occurs in a process of calibrating the first to-be-calibrated device includes: when the first image information does not include a complete image of the calibration board, receiving an offset of the calibration board sent by the vehicle; and controlling, based on the offset, the mechanical arm to be adjusted from the first calibration position to a second calibration position.

In this embodiment of this application, in a process of calibrating the camera, if the camera does not capture the complete image of the calibration board, the vehicle may calculate an offset of the mechanical arm and send the offset to the calibration apparatus. The calibration apparatus may adjust the mechanical arm from the first calibration position to the second calibration position based on the offset. In this way, the camera may capture the complete image of the calibration board when the mechanical arm is at the second calibration position. In this way, the calibration apparatus automatically resolves an exception occurring during calibration of the camera, and the exception does not need to be manually resolved. This helps improve intelligence during device calibration, thereby helping improve calibration efficiency.

With reference to the first aspect, in some implementations of the first aspect, the first to-be-calibrated device is the head-up display, a camera is disposed at an end of the mechanical arm, image information collected by the camera at a third calibration position is second image information, the first motion track information includes the third calibration position, and the handling an exception when the exception occurs in a process of calibrating the first to-be-calibrated device includes: when the second image information does not include a complete image displayed by the head-up display, controlling, based on the second image information, the mechanical arm to be adjusted from the third calibration position to a fourth calibration position.

In this embodiment of this application, in a process of calibrating the head-up display, if the camera at the end of the mechanical arm does not capture the complete image displayed by the head-up display, the calibration apparatus may calculate an offset of the mechanical arm, and adjust the mechanical arm from the third calibration position to the fourth calibration position based on the offset. In this way, when the mechanical arm is at the fourth calibration position, the camera may capture the complete image displayed by the head-up display. In this way, the calibration apparatus automatically resolves an exception occurring during calibration of the camera, and the exception does not need to be manually resolved. This helps improve intelligence during device calibration, thereby helping improve calibration efficiency.

With reference to the first aspect, in some implementations of the first aspect, the method further includes: before the first to-be-calibrated device is calibrated, controlling the mechanical arm to move to a first initial position; obtaining a wheel arch measurement result of the vehicle; and controlling, based on the wheel arch measurement result, the mechanical arm to be adjusted from the first initial position to a second initial position.

In this embodiment of this application, before calibrating the first to-be-calibrated device, the calibration apparatus may control the mechanical arm to move to the first initial position. After the wheel arch measurement result is obtained, the mechanical arm may be controlled to be adjusted from the first initial position to the second initial position. In this way, the mechanical arm does not need to be manually placed. This helps reduce labor and trial-and-error costs and improve intelligence during device calibration, thereby helping improve calibration efficiency.

With reference to the first aspect, in some implementations of the first aspect, the method further includes: before the identification information of the vehicle is sent to the first server, requesting the identification information from the vehicle; and receiving the identification information sent by the vehicle.

With reference to the first aspect, in some implementations of the first aspect, the identification information includes vehicle type information of the vehicle.

According to a second aspect, a calibration method is provided. The method includes: sending identification information of a vehicle and identification information of a first to-be-calibrated device to a first server; receiving first motion track information sent by the first server, where the first motion track information includes motion track information of a mechanical arm for calibration of the first to-be-calibrated device; and sending the first motion track information to a calibration apparatus.

With reference to the second aspect, in some implementations of the second aspect, the method further includes: handling an exception when the exception occurs in a process of calibrating the first to-be-calibrated device.

With reference to the second aspect, in some implementations of the second aspect, a calibration board is disposed at an end of the mechanical arm, and the first to-be-calibrated device is a camera. The handling an exception when the exception occurs in a process of calibrating the first to-be-calibrated device includes: when the camera fails to start, restarting the camera.

With reference to the second aspect, in some implementations of the second aspect, a calibration board is disposed at an end of the mechanical arm, and the first to-be-calibrated device is a camera. The handling an exception when the exception occurs in a process of calibrating the first to-be-calibrated device includes: when first image information collected by the camera does not include a complete image of the calibration board, determining an offset of the calibration board based on the first image information; and sending the offset to the calibration apparatus.

With reference to the second aspect, in some implementations of the second aspect, the first to-be-calibrated device is a camera. The handling an exception when the exception occurs in a process of calibrating the first to-be-calibrated device includes: when a calibration error is not within a preset error range, sending indication information to the calibration apparatus, where the indication information indicates the calibration apparatus to re-calibrate the first to-be-calibrated device.

According to a third aspect, a calibration method is provided. The method includes: sending calibration information to a vehicle, where the calibration information is used to calibrate one or more to-be-calibrated devices in the vehicle; and receiving a calibration result of the one or more to-be-calibrated devices sent by the vehicle.

In this embodiment of this application, a calibration apparatus may send, to the vehicle, the calibration information used to calibrate the one or more to-be-calibrated devices, and receive the calibration result of the one or more to-be-calibrated devices, so that the one or more to-be-calibrated devices in the vehicle can be calibrated. No manual intervention is needed in this process. This helps reduce labor and trial-and-error costs and improves intelligence during device calibration, thereby helping improve calibration efficiency.

With reference to the third aspect, in some implementations of the third aspect, the calibration information includes information about one or more work stations, where the one or more work stations are work stations at which the one or more to-be-calibrated devices are calibrated.

In this embodiment of this application, the calibration information may carry the information about the one or more work stations, so that the vehicle may control, based on the information about the one or more work stations, the vehicle to automatically travel to each work station. In this way, the vehicle does not need to be manually driven to the first work station. This helps reduce labor and time costs and improve intelligence during device calibration, thereby helping improve calibration efficiency.

With reference to the third aspect, in some implementations of the third aspect, the calibration information includes identification information of the one or more to-be-calibrated devices.

In this embodiment of this application, the calibration information may carry the identification information of the one or more to-be-calibrated devices. In this way, after receiving the identification information of the one or more to-be-calibrated devices, the vehicle performs a corresponding calibration operation. For example, if the calibration information carries identification information of a camera, the vehicle may control the camera to start after receiving the calibration information.

With reference to the third aspect, in some implementations of the third aspect, the one or more to-be-calibrated devices include the camera. The method further includes: when the camera fails to be calibrated, receiving indication information sent by the vehicle, where the indication information indicates to re-calibrate the camera.

In this embodiment of this application, after the camera fails to be calibrated, the vehicle may send the indication information to the calibration apparatus, so that the calibration apparatus may re-calibrate the camera. In this way, the vehicle and the calibration apparatus can automatically resolve an exception occurring during calibration of the camera, and the exception does not need to be manually resolved. This helps improve intelligence during device calibration, thereby helping improve calibration efficiency.

With reference to the third aspect, in some implementations of the third aspect, the method further includes: prompting a user with the calibration result of the one or more to-be-calibrated devices.

In this embodiment of this application, after receiving the calibration result, the calibration apparatus may further prompt the user with the calibration result, so that the user learns of the calibration result of the one or more to-be-calibrated devices.

According to a fourth aspect, a calibration apparatus is provided. The apparatus includes: a sending unit, configured to send identification information of a vehicle to a first server; a receiving unit, configured to receive first motion track information sent by the first server based on the identification information, where the first motion track information includes motion track information of a mechanical arm for calibration of a first to-be-calibrated device in the vehicle; and a control unit, configured to control, based on the first motion track information, the mechanical arm to calibrate the first to-be-calibrated device.

With reference to the fourth aspect, in some implementations of the fourth aspect, the receiving unit is further configured to receive second motion track information sent by the first server when calibration of the first to-be-calibrated device is completed, where the second motion track information includes motion track information of the mechanical arm for calibration of a second to-be-calibrated device in the vehicle. The control unit is further configured to control, based on the second motion track information, the mechanical arm to calibrate the second to-be-calibrated device.

With reference to the fourth aspect, in some implementations of the fourth aspect, the control unit is further configured to control the vehicle to travel to a first work station, where the first work station is a work station at which the first to-be-calibrated device is calibrated.

With reference to the fourth aspect, in some implementations of the fourth aspect, the sending unit is further configured to send information about a plurality of to-be-calibrated devices to a second server, where the plurality of to-be-calibrated devices include the first to-be-calibrated device. The receiving unit is further configured to receive traveling track information sent by the second server, where the traveling track information includes track information for traveling of the vehicle between a plurality of work stations, and the plurality of work stations include the first work station. The control unit is specifically configured to control, based on the traveling track information, the vehicle to travel to the first work station.

With reference to the fourth aspect, in some implementations of the fourth aspect, the first to-be-calibrated device includes a camera, a head-up display, or a radar.

With reference to the fourth aspect, in some implementations of the fourth aspect, the apparatus further includes: an exception handling unit, configured to handle an exception when the exception occurs in a process of calibrating the first to-be-calibrated device.

With reference to the fourth aspect, in some implementations of the fourth aspect, the first to-be-calibrated device is the camera, a calibration board is disposed at an end of the mechanical arm, image information collected by the camera when the mechanical arm is at a first calibration position is first image information, and the first motion track information includes the first calibration position. The receiving unit is further configured to: when the first image information does not include a complete image of the calibration board, receive an offset of the calibration board sent by the vehicle. The exception handling unit is specifically configured to control, based on the offset, the mechanical arm to be adjusted from the first calibration position to a second calibration position.

With reference to the fourth aspect, in some implementations of the fourth aspect, the first to-be-calibrated device is the head-up display, a camera is disposed at an end of the mechanical arm, image information collected by the camera at a third calibration position is second image information, and the first motion track information includes the third calibration position. The exception handling unit is specifically configured to: when the second image information does not include a complete image displayed by the head-up display, control, based on the second image information, the mechanical arm to be adjusted from the third calibration position to a fourth calibration position.

With reference to the fourth aspect, in some implementations of the fourth aspect, the apparatus further includes an obtaining unit. The control unit is further configured to: before the first to-be-calibrated device is calibrated, control the mechanical arm to move to a first initial position. The obtaining unit is configured to obtain a wheel arch measurement result of the vehicle. The control unit is further configured to control, based on the wheel arch measurement result, the mechanical arm to be adjusted from the first initial position to a second initial position.

With reference to the fourth aspect, in some implementations of the fourth aspect, the sending unit is further configured to: before sending the identification information of the vehicle to the first server, send request information to the vehicle, where the request information is used to request the identification information. The receiving unit is further configured to receive the identification information sent by the vehicle.

With reference to the fourth aspect, in some implementations of the fourth aspect, the identification information includes vehicle type information of the vehicle.

According to a fifth aspect, a calibration apparatus is provided. The apparatus includes: a sending unit, configured to send identification information of a vehicle and identification information of a first to-be-calibrated device to a first server; and a receiving unit, configured to receive first motion track information sent by the first server, where the first motion track information includes motion track information of a mechanical arm for calibration of the first to-be-calibrated device. The sending unit is further configured to send the first motion track information to the calibration apparatus.

With reference to the fifth aspect, in some implementations of the fifth aspect, the apparatus further includes an exception handling unit, configured to handle an exception when the exception occurs in a process of calibrating the first to-be-calibrated device.

With reference to the fifth aspect, in some implementations of the fifth aspect, a calibration board is disposed at an end of the mechanical arm, the first to-be-calibrated device is a camera, and the exception handling unit is specifically configured to: when the camera fails to start, restart the camera.

With reference to the fifth aspect, in some implementations of the fifth aspect, a calibration board is disposed at an end of the mechanical arm, the first to-be-calibrated device is a camera, and the exception handling unit is specifically configured to: when first image information collected by the camera does not include a complete image of the calibration board, determine an offset of the mechanical arm based on the first image information. The sending unit is further configured to send the offset to the calibration apparatus.

With reference to the fifth aspect, in some implementations of the fifth aspect, the first to-be-calibrated device is a camera, and the exception handling unit is specifically configured to determine, based on a calibration result, that a calibration error is not within a preset error range. The sending unit is further configured to send indication information to the calibration apparatus, where the indication information indicates the calibration apparatus to re-calibrate the first to-be-calibrated device.

According to a sixth aspect, a calibration apparatus is provided. The apparatus includes: a sending unit, configured to send a calibration message to a vehicle, where the calibration message is used to calibrate one or more to-be-calibrated devices in the vehicle; and a receiving unit, configured to receive a calibration result of the one or more to-be-calibrated devices sent by the vehicle.

With reference to the sixth aspect, in some implementations of the sixth aspect, the calibration message includes information about one or more work stations, where the one or more work stations are work stations at which the one or more to-be-calibrated devices are calibrated.

With reference to the sixth aspect, in some implementations of the sixth aspect, the calibration message includes identification information of the one or more to-be-calibrated devices.

With reference to the sixth aspect, in some implementations of the sixth aspect, the one or more to-be-calibrated devices include a camera. The receiving unit is further configured to: when the camera fails to be calibrated, receive indication information sent by the vehicle, where the indication information indicates to re-calibrate the camera.

With reference to the sixth aspect, in some implementations of the sixth aspect, the apparatus includes: a prompting unit, configured to prompt a user with the calibration result of the one or more to-be-calibrated devices.

According to a seventh aspect, an apparatus is provided. The apparatus includes: a memory, configured to store computer instructions; and a processor, configured to execute the computer instructions stored in the memory, so that the apparatus performs the method according to the first aspect or the third aspect.

According to an eighth aspect, an apparatus is provided. The apparatus includes: a memory, configured to store computer instructions; and a processor, configured to execute the computer instructions stored in the memory, so that the apparatus performs the method according to the second aspect.

According to a ninth aspect, an industrial computer is provided. The industrial computer includes the apparatus according to any one of the fourth aspect, the sixth aspect, or the seventh aspect.

According to a tenth aspect, a vehicle is provided. The vehicle includes the apparatus according to the fifth aspect or the eighth aspect.

According to an eleventh aspect, a computer program product is provided. The computer program product includes computer program code. When the computer program code is run on a computer, the computer is enabled to perform the method according to the first aspect or the third aspect.

According to a twelfth aspect, a computer program product is provided. The computer program product includes computer program code. When the computer program code is run on a computer, the computer is enabled to perform the method according to the second aspect.

The computer program code may be all or partially stored in a first storage medium. The first storage medium may be encapsulated together with a processor, or may be encapsulated separately from a processor. This is not specifically limited in this embodiment of this application.

According to a thirteenth aspect, a computer-readable medium is provided. The computer-readable medium stores program code. When the computer program code is run on a computer, the computer is enabled to perform the method according to the first aspect or the third aspect.

According to a fourteenth aspect, a computer-readable medium is provided. The computer-readable medium stores program code. When the computer program code is run on a computer, the computer is enabled to perform the method according to the second aspect.

According to a fifteenth aspect, an embodiment of this application provides a chip system. The chip system includes a processor, configured to invoke a computer program or computer instructions stored in a memory, so that the processor performs the method according to the first aspect or the third aspect.

With reference to the fifteenth aspect, in a possible implementation, the processor is coupled to the memory through an interface.

With reference to the fifteenth aspect, in a possible implementation, the chip system further includes a memory. The memory stores the computer program or the computer instructions.

According to a sixteenth aspect, an embodiment of this application provides a chip system. The chip system includes a processor, configured to invoke a computer program or computer instructions stored in a memory, so that the processor performs the method according to the second aspect.

With reference to the sixteenth aspect, in a possible implementation, the processor is coupled to the memory through an interface.

With reference to the sixteenth aspect, in a possible implementation, the chip system further includes a memory. The memory stores the computer program or the computer instructions.

In this embodiment of this application, during calibration of the first to-be-calibrated device in the vehicle, a calibration apparatus (for example, an industrial computer) may send the identification information of the vehicle to the first server, and control, based on the first motion track information sent by the first server, the mechanical arm to calibrate the first to-be-calibrated device. This replaces a manner of obtaining a path of the mechanical arm through a plurality of manual placements and attempts, so that the mechanical arm automatically and quickly moves to a target position. This helps reduce labor and trial-and-error costs and improve intelligence during device calibration, thereby helping improve calibration efficiency.

When calibration of the first to-be-calibrated device is completed, the second motion track information sent by the first server is received, so that the second to-be-calibrated device is calibrated based on the second motion track information. The second to-be-calibrated device is calibrated without a manual control or a manual operation.

With the use of an automatic driving capability of the vehicle, the vehicle is controlled to travel to the first work station, so that the vehicle does not need to be manually driven to the first work station. This helps reduce labor and time costs and improve intelligence during device calibration, thereby helping improve calibration efficiency.

The second server automatically plans a sequence of calibrating the plurality of to-be-calibrated devices and a motion track for traveling of the vehicle between work stations, so that the calibration device may control the vehicle to switch between a plurality of work stations, without manual task planning. This helps reduce labor costs and improve efficiency of running of the vehicle between the plurality of work stations, thereby helping improve calibration efficiency.

If an exception occurs in a process of calibrating a to-be-calibrated device, the exception can be automatically handled. In this way, the exception does not need to be manually resolved when the exception occurs, and the calibration apparatus can automatically resolve the exception. This helps improve intelligence during device calibration, thereby helping improve calibration efficiency.

### BRIEF DESCRIPTION OF DRAWINGS

FIG. 1 is a schematic diagram of a vehicle cabin scenario according to an embodiment of this application;
FIG. 2 is a diagram of an architecture of a system according to an embodiment of this application;
FIG. 3A and FIG. 3B are a schematic flowchart of a calibration method according to an embodiment of this application;
FIG. 4 is a schematic diagram of a calibration principle according to an embodiment of this application;
FIG. 5 is a schematic diagram of a calibration position learning system according to an embodiment of this application;
FIG. 6 shows image information collected by a camera at different calibration board movement points according to an embodiment of this application;
FIG. 7 is another schematic flowchart of a calibration method according to an embodiment of this application;
FIG. 8 is another schematic flowchart of a calibration method according to an embodiment of this application;
FIG. 9 is a schematic block diagram of a calibration apparatus according to an embodiment of this application; and
FIG. 10 is another schematic block diagram of a calibration apparatus according to an embodiment of this application.

### DESCRIPTION OF EMBODIMENTS

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In embodiments of this application, modifiers such as "first" and "second" are merely intended to distinguish between different described objects, but not to be intended to limit positions, a sequence, priorities, quantities, content, or the like of the described objects. In embodiments of this application, a modifier, such as an ordinal number, used to distinguish between described objects does not constitute a limitation on the described objects. For descriptions of the described objects, refer to the descriptions of the context in the claims or the embodiments. Such a modifier should not constitute an unnecessary limitation. In the descriptions of embodiments, unless otherwise specified, "a plurality of" means two or more.

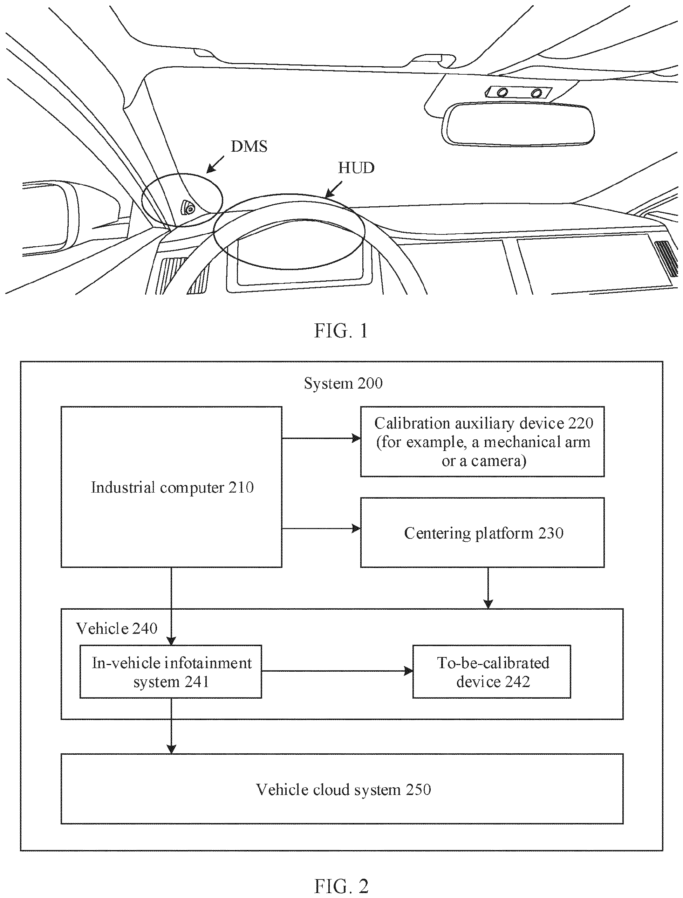

FIG. 1 is a schematic diagram of a vehicle cabin scenario according to an embodiment of this application. One or more cameras may be mounted inside an intelligent cabin, and configured to capture an image inside or outside the cabin, for example, a camera of a driver monitoring system (driver monitor system, DMS), a camera of a cabin monitoring system (cabin monitor system, CMS), and a camera of a dashcam (dashcam). In FIG. 1, a DMS disposed on a pillar A is used as an example. In addition, a head-up display (head up display, HUD) is disposed inside a dashboard in the cabin.

As described above, different features or functions of the cabin are established in different coordinate systems. If devices in different coordinate systems need to interact with each other, calibration needs to be performed. For example, a visual perception feature (for example, image data collected by a camera) in the cabin is established in a camera coordinate system, and another device (for example, a head-up display) in a vehicle relies on a vehicle coordinate system. In consideration of multi-modal fusion between vision and other perceptions, it is necessary to establish a conversion relationship between the camera coordinate system and the vehicle coordinate system. To establish the relationship between the camera coordinate system and the vehicle coordinate system, calibration needs to be performed.

For example, a vehicle may determine a position of an eyeball of a user by using image data collected by a camera, to adjust a range of an eyebox (eyebox), so that a driver at different positions can clearly see images displayed by the HUD. In this case, the relationship between the camera coordinate system and the vehicle coordinate system needs to be established.

The eyebox described above is usually a range in which the driver's eyes can see an entire image displayed by the HUD. In order to adapt to a height difference between drivers, a size of the eyebox is generally 130 mm x 50 mm. To be specific, the driver's eyes have a moving range of ±50 mm in a vertical direction and a moving range of ±130 mm in a horizontal direction. If the drive's eyes are within the range of the eyebox, the driver can see a complete and clear image. If the drive's eyes go beyond the range of the eyebox, the driver may see a distorted image or cannot see an image.

For another example, when the vehicle determines a distance between and orientations of an obstacle and the vehicle by using image data collected by a camera and image data collected by a lidar, the relationship between the camera coordinate system and the vehicle coordinate system needs to be established.

Embodiments of this application provide a calibration method and apparatus, to implement automatic calibration of a device in the cabin. For example, during calibration of the camera in the cabin, the relationship between the camera coordinate system and the vehicle coordinate system may be directly established. In this way, during multi-modal fusion, data in a same coordinate system may be directly processed.

FIG. 2 is a diagram of an architecture of a system 200 according to an embodiment of this application. As shown in FIG. 2, the system 200 includes an industrial computer 210, a calibration auxiliary device (for example, a mechanical arm or a camera) 220, a centering platform 230, a vehicle 240, and a vehicle cloud system 250. The vehicle 240 may include an in-vehicle infotainment system 241 and a to-be-calibrated device 242. The industrial computer 210 serves as a control body of the entire system 200, and is inter-connected to the centering platform 230, the in-vehicle infotainment system 241, and the calibration auxiliary device 220. The industrial computer 210 may carry control logic of calibration, the in-vehicle infotainment system 241 may carry logic of a calibration algorithm, the vehicle cloud system 250 may carry a prediction model, and the prediction model may output data required for an automation process. The centering platform 230 is configured to straighten the vehicle 240. The calibration auxiliary device 220 is configured to execute different calibration tasks.

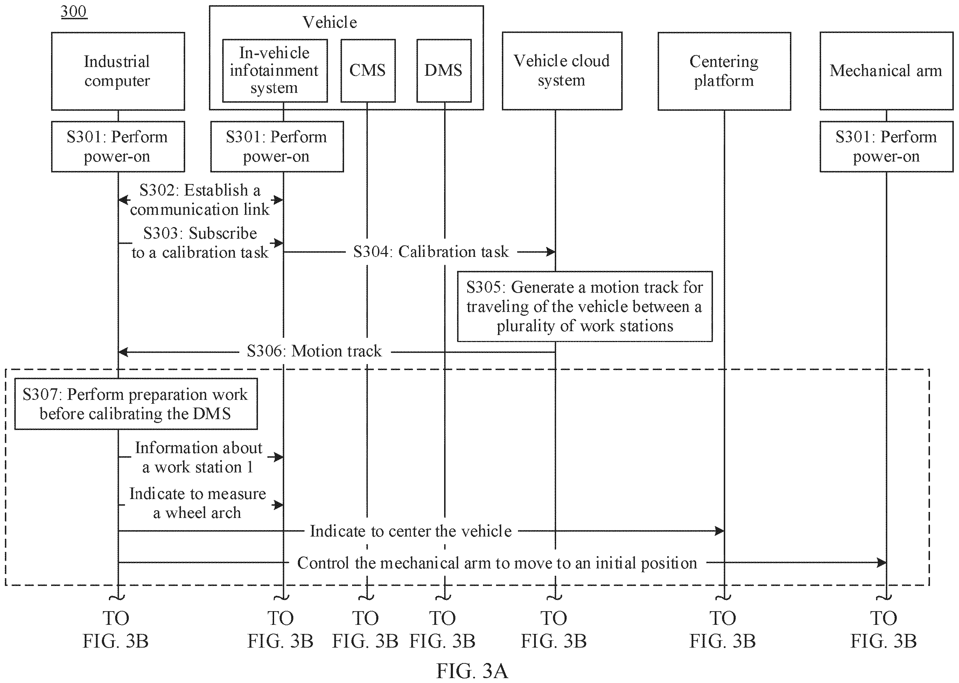

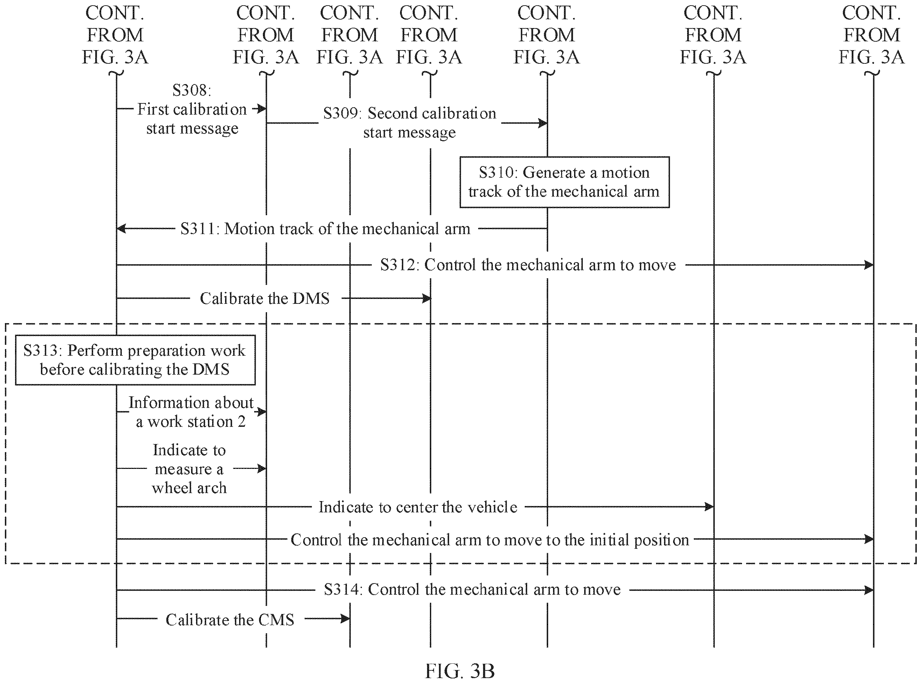

FIG. 3A and FIG. 3B are a schematic flowchart of a calibration method 300 according to an embodiment of this application. The method 300 includes:
S301: Power on devices in a system 200.

For example, a staff member at a site powers on all devices in the system 200. For example, after a vehicle 240 is powered on, an in-vehicle infotainment system 241 starts. After an industrial computer 210 is powered on, the industrial computer starts. After a mechanical arm is powered on, the mechanical arm is initialized. The foregoing step S301 may be manually controlled, or the devices in the system 200 may be controlled by using another device to be powered on.

S302: The industrial computer 210 establishes a communication link with the in-vehicle infotainment system 241.

For example, the industrial computer 210 may send a connection establishment request to the in-vehicle infotainment system 241. The in-vehicle infotainment system 241 is initialized after receiving the connection establishment request, and may return an indication of successful initialization to the industrial computer 210 after the initialization is completed. After receiving the indication of successful initialization, the industrial computer 210 may request the in-vehicle infotainment system 241 to provide a secure random number seed (security seed). The in-vehicle infotainment system 241 generates the secure random number seed based on the request, and sends the secure random number seed to the industrial computer 210. After receiving the secure random number seed, the industrial computer 210 generates a security key based on the secure random number seed. The industrial computer 210 may send the security key to the in-vehicle infotainment system 241. The in-vehicle infotainment system 241 verifies the security key, and after the verification succeeds, authentication succeeds. In this way, the industrial computer 210 may establish the communication link with the in-vehicle infotainment system 241.

S303: The industrial computer 210 subscribes to a calibration task from the in-vehicle infotainment system 241.

For example, the calibration task may include identification information of one or more to-be-calibrated devices (for example, a DMS, a CMS, and an HUD).

In an embodiment, the industrial computer 210 may send the calibration task to the in-vehicle infotainment system 241 based on a preset setting.

For example, after detecting that a user inputs information about the one or more to-be-calibrated devices, the industrial computer 210 may send the identification information of the one or more to-be-calibrated devices to the in-vehicle infotainment system 241. The industrial computer 210 may include a display panel, and the display panel may include information about a to-be-calibrated device (for example, a button 1 for choosing to calibrate a DMS, a button 2 for choosing to calibrate a CMS, and a button 3 for choosing to calibrate an HUD). When the industrial computer detects operations of tapping the button 1, the button 2, and the button 3 by the user, the industrial computer 210 may determine to calibrate the DMS, the CMS, and the HUD. In this way, the industrial computer 210 may send identification information of the DMS, the CMS, and the HUD to the in-vehicle infotainment system 241.

S304: The in-vehicle infotainment system 241 sends the calibration task to the vehicle cloud system 250.

S305: The vehicle cloud system 250 generates, based on the calibration task, a motion track for traveling of the vehicle between a plurality of work stations.

In an embodiment, different to-be-calibrated devices may be calibrated at a plurality of work stations. For example, the plurality of work stations include a work station 1, a work station 2, and a work station 3. The DMS may be calibrated at the work station 1, the CMS may be calibrated at the work station 2, and the HUD may be calibrated at the work station 3. For example, Table 1 shows a correspondence between the plurality of work stations and a plurality of to-be-calibrated devices.

**Table 1**

| Work station number | To-be-calibrated device |
|---|---|
| Work station 1 | DMS |
| Work station 2 | CMS |
| Work station 3 | HUD |
| ... | ... |

For example, when the vehicle 240 is at the work station 1, the industrial computer 210 may control the mechanical arm to calibrate the DMS. When the vehicle is at the work station 2, the industrial computer 210 may control the mechanical arm to calibrate the CMS. When the vehicle is at the work station 3, the industrial computer 210 may control the mechanical arm to calibrate the HUD.

In the foregoing description, an example in which different work stations correspond to different to-be-calibrated devices is used. This embodiment of this application is not limited thereto. For example, different to-be-calibrated devices may be calibrated at a same work station. Table 2 shows another correspondence between the plurality of work stations and a plurality of to-be-calibrated devices.

**Table 2**

| Work station number | To-be-calibrated device |
|---|---|
| Work station 1 | DMS, CMS |
| Work station 2 | HUD, central control screen |
| ... | ... |

For example, when the vehicle 240 is at the work station 1, the industrial computer 210 may control the mechanical arm to calibrate the DMS and the CMS. When the vehicle is at the work station 2, the industrial computer 210 may control the mechanical arm to calibrate the HUD and the central control screen.

In an embodiment, the vehicle cloud system 250 may store a position relationship between work stations. When receiving the calibration task, the vehicle cloud system 250 may generate, based on identification information of a plurality of to-be-calibrated devices in the calibration task and a correspondence between each of the plurality of work stations and the to-be-calibrated device, a motion track for traveling of the vehicle 240 between the plurality of work stations. In this way, the vehicle cloud system 250 may send the motion track to the industrial computer 210 through the in-vehicle infotainment system 241.

In an embodiment, the in-vehicle infotainment system 241 may further send information about a start position of the vehicle 240 to the vehicle cloud system 250. When receiving the calibration task and the information about the start position of the vehicle 240, the vehicle cloud system 250 may generate a motion track of the vehicle 240 from the start position to an end position (for example, a work station that is farthest from the start position of the vehicle) based on the identification information of the plurality of to-be-calibrated devices and the foregoing correspondence.

In an embodiment, the vehicle cloud system 250 may generate a motion track for traveling of the vehicle 240 with a shortest distance between the plurality of work stations.

In an embodiment, the vehicle cloud system 250 may generate a motion track for traveling of the vehicle 240 with fewest conflicts between the plurality of work stations.

The foregoing S303 to S305 are described by using an example in which the vehicle cloud system 250 determines the motion track for traveling of the vehicle 240 between the plurality of work stations. This embodiment of this application is not limited thereto. For example, the industrial computer 210 may store the foregoing correspondence, so that the industrial computer 210 may determine, based on the calibration task and the correspondence, the motion track for traveling of the vehicle 240 between the plurality of work stations. For another example, the in-vehicle infotainment system 250 may store the foregoing correspondence, so that the in-vehicle infotainment system 250 may determine, based on the calibration task and the correspondence, the motion track for traveling of the vehicle 240 between the plurality of work stations.

In this embodiment of this application, the vehicle cloud system may automatically generate, based on the calibration task subscribed by the user, a sequence of calibration tasks and a motion track for traveling of the vehicle between the plurality of work stations, without manual task planning. This helps improve automation during device calibration, and also helps reduce labor costs in a device calibration process.

S306: The vehicle cloud system 250 sends the motion track to the industrial computer 210 through the in-vehicle infotainment system 241.

When receiving the motion track, the industrial computer 210 may learn of a sequence of calibrating the one or more to-be-calibrated devices.

For example, the vehicle 240 includes a plurality of to-be-calibrated devices (for example, a DMS, a CMS, and an HUD). A work station at which the DMS is calibrated is a work station 1, a work station at which the CMS is calibrated is a work station 2, and a work station at which the HUD is calibrated is a work station 3. The sequence, planned by the vehicle cloud system 250, of calibrating the plurality of to-be-calibrated devices is the DMS, the CMS, and the HUD. To be specific, the motion track is from a current position of the vehicle to the work station 1, from the work station 1 to the work station 2, and from the work station 2 to the work station 3.

S307: The industrial computer 210 performs preparation work before calibrating the DMS.

In an embodiment, the preparation work includes but is not limited to the following: The industrial computer 210 obtains identification information of the vehicle, controls the vehicle to travel to the work station 1, controls the calibration auxiliary device 220 (for example, a mechanical arm) to move to an initial position, obtains a wheel arch measurement result, adjusts the initial position based on the wheel arch measurement result, indicates the centering platform 220 to center the vehicle, and so on.

For example, the industrial computer 210 may request the identification information of the vehicle 240 from the vehicle. The vehicle 240 may send the identification information of the vehicle 240 to the industrial computer 210.

For example, the identification information may be vehicle type information of the vehicle.

For another example, the industrial computer 210 may store a correspondence between the identification information and the vehicle type information. When receiving the identification information, the industrial computer 210 may determine the vehicle type information based on the identification information and the correspondence. For example, Table 3 shows a correspondence between the identification information and the vehicle type information.

**Table 3**

| Identification information | Vehicle type information |
|---|---|
| 1 | Vehicle type 1 |
| 2 | Vehicle type 2 |
| 3 | Vehicle type 3 |
| ... | ... |

It should be understood that Table 3 is merely an example. Alternatively, the vehicle type information may be determined by using other identification information. For example, when the identification information is A, the identification information may correspond to a vehicle type 1, or when the identification information is B, the identification information may correspond to a vehicle type 2.

In an embodiment, the industrial computer 210 may control, based on the motion track delivered by the vehicle cloud system 250, the vehicle to travel to the work station 1. For example, the industrial computer 210 may send information about the work station 1 to the in-vehicle infotainment system 241, so that the in-vehicle infotainment system 241 controls the vehicle to travel to the work station 1.

In this embodiment of this application, in a calibration process, an automatic driving capability of the vehicle may be used, and the industrial computer may control, based on the calibration sequence, the vehicle to automatically travel to a target work station. In this way, the vehicle does not need to be manually driven. This helps improve automation during device calibration, and also helps reduce labor costs in a device calibration process. In addition, this helps reduce a time of the device calibration process, thereby improving device calibration efficiency.

In an embodiment, the vehicle cloud system 250 may determine an initial position of a mechanical arm of each vehicle type in different vehicle types based on a reinforcement learning algorithm. The vehicle cloud system 250 may send the initial position of the mechanical arm of each vehicle type to the industrial computer 210 through the in-vehicle infotainment system 241. In this way, after obtaining the identification information (for example, vehicle type information) of the vehicle, the industrial computer 210 may determine the initial position of the mechanical arm of the vehicle type based on the identification information of the vehicle. In this way, the industrial computer 210 may control the mechanical arm to move to the initial position.

In an embodiment, before starting calibration of the DMS, the industrial computer 210 may request, from the vehicle cloud system 250, the initial position of the mechanical arm of the vehicle type.

For example, the industrial computer 210 may obtain vehicle type information of the vehicle (for example, a vehicle of type XX of brand XX) from the in-vehicle infotainment system 241. In this way, the industrial computer 210 may configure initial position information for the mechanical arm based on the vehicle type information. For example, the industrial computer 210 may control the mechanical arm to move to the initial position.

Because the initial position may be determined by the vehicle cloud system 250 based on a vehicle model, in an actual calibration process, an actual vehicle is inconsistent with the vehicle model due to a change in tire pressure of a tire. The industrial computer may obtain information about a wheel arch through measurement by a laser sensor, and may adjust the initial position of the mechanical arm based on the information about the wheel arch.

S308: The industrial computer 210 sends a first calibration start message to the in-vehicle infotainment system 241.

In an embodiment, the calibration start message may include the identification information (for example, vehicle type information) of the vehicle.

S309: The in-vehicle infotainment system 241 sends a second calibration start message to the vehicle cloud system 250.

In an embodiment, the second calibration start message may include the information about the vehicle type and identification information of the DMS.

S310: The vehicle cloud system 250 generates motion track information of the mechanical arm.

In an embodiment, if the second calibration start message includes the information about the vehicle type and the identification information of the DMS, the vehicle cloud system 250 may generate a motion track of the mechanical arm for calibration of the DMS of the vehicle type.

In an embodiment, the second calibration start message may alternatively include only vehicle type information. In this way, after receiving the second calibration start message, the vehicle cloud system 250 may generate a motion track of a corresponding mechanical arm for each of the plurality of to-be-calibrated devices (for example, a DMS, a CMS, and an HUD) of the vehicle type. For example, if the second calibration start message includes information about the vehicle type 1, the vehicle cloud system 250 may generate motion track information of the mechanical arm for calibration of a DMS of the vehicle type 1, motion track information of the mechanical arm for calibration of a CMS of the vehicle type 1, and motion track information of the mechanical arm for calibration of an HUD of the vehicle type 1.

In an embodiment, the vehicle cloud system 250 may determine information about a vehicle model based on the vehicle type information, to generate a motion track of the mechanical arm based on the information about the vehicle model and the reinforcement learning algorithm. The information about the vehicle model may include frame information of a vehicle of the vehicle type. The frame information of the vehicle includes but is not limited to a size of each part of the vehicle, for example, a size between a left wheel and a right wheel of the vehicle, a size of a vehicle window, and a size of a vehicle door.

It should be understood that, in this embodiment of this application, the motion track information of the mechanical arm generated by the vehicle cloud system 250 may be generated in real time after the second calibration start message is received, or may be generated before the second calibration start message is received. This is not limited in this embodiment of this application.

S311: The vehicle cloud system 250 sends the motion track information of the mechanical arm to the industrial computer 210 through the in-vehicle infotainment system 241.

The foregoing S308 to S311 are described by using an example in which the industrial computer 210 requests the motion track information of the mechanical arm from the vehicle cloud system 250 through the in-vehicle infotainment system 241. This embodiment of this application is not limited thereto. For example, the industrial computer 210 may directly request the motion track information of the mechanical arm from the vehicle cloud system 250. After generating the motion track information of the mechanical arm, the vehicle cloud system 250 may directly send the motion track information to the industrial computer 210.

S312: The industrial computer 210 controls, based on the motion track, the mechanical arm to move, to calibrate the DMS.

For example, the vehicle cloud system 250 may automatically generate, by using the reinforcement learning algorithm, the motion track of the mechanical arm for calibration of the DMS. The vehicle cloud system 250 may send the motion track to the industrial computer 210 through the in-vehicle infotainment system 241. The industrial computer 210 controls, based on the received motion track, the mechanical arm to move. When the mechanical arm moves to different calibration positions on the motion track, the industrial computer 210 may notify the in-vehicle infotainment system 241 to control the DMS to collect image information including a calibration board. The in-vehicle infotainment system 241 completes calibration of the DMS based on image information collected by the DMS at each calibration position and a calibration algorithm.

In this embodiment of this application, the DMS may be calibrated by using the industrial computer 210 and the in-vehicle infotainment system 241. Calibration work performed by the industrial computer 210 includes: controlling, based on the motion track of the mechanical arm, the mechanical arm to move to each calibration position, and indicating the in-vehicle infotainment system 241 to control the DMS to capture an image of the calibration board when controlling the mechanical arm to move to each calibration position. Calibration work performed by the in-vehicle infotainment system 241 includes: after receiving an indication of the industrial computer 210, controlling the DMS to capture the image of the calibration board, and establishing a relationship between a camera coordinate system and a vehicle coordinate system by using collected image information and the calibration algorithm.

In an embodiment, when an exception occurs in a process of calibrating the DMS, the in-vehicle infotainment system 241 may automatically resolve the exception.

For example, after receiving the indication of the industrial computer 210, the in-vehicle infotainment system 241 may first start the DMS. If the in-vehicle infotainment system 241 detects that the DMS fails to start, the in-vehicle infotainment system 241 may re-control the DMS to start. When the in-vehicle infotainment system 241 receives startup success information sent by the DMS, the in-vehicle infotainment system may determine that the DMS successfully starts.

It should be understood that, that the DMS fails to start may be understood as that the in-vehicle infotainment system 241 has not received, in a process of controlling the DMS to be started, the startup success information fed back by the DMS, or the in-vehicle infotainment system 241 has not received, within preset duration starting from a time of controlling the DMS to start, the startup success information fed back by the DMS.

For example, the in-vehicle infotainment system 241 may verify the image information collected by the DMS. If it is detected that no complete calibration board is identified in a visible range of the DMS, the in-vehicle infotainment system 241 may generate an offset of the calibration board based on identified image information, and feed back the offset to the industrial computer 210. The industrial computer 210 may control, based on the offset, the mechanical arm to perform adjustment, and after the adjustment is completed, notify the in-vehicle infotainment system 241 to re-control the DMS to perform photographing and verification until the complete calibration board is identified within the visible range of the DMS. After the mechanical arm completes all motion tracks and image information of all path points meets a requirement (for example, image information collected at all path points includes the complete calibration board), the in-vehicle infotainment system 241 may start the calibration algorithm.

For example, when determining that an error of a calibration result (for example, an intrinsic parameter of a camera or an extrinsic parameter of the camera in the vehicle coordinate system) is within a preset error range, the in-vehicle infotainment system 241 may determine that the DMS is successfully calibrated; otherwise, the in-vehicle infotainment system 241 may indicate the industrial computer 210 to re-calibrate the DMS.

S313: The industrial computer 210 performs preparation work before calibrating the CMS.

In an embodiment, the preparation work includes but is not limited to the following: The industrial computer 210 obtains identification information of the vehicle, controls the vehicle to travel to the work station 2, controls the mechanical arm to move to an initial position, obtains a wheel arch measurement result, adjusts the initial position based on the wheel arch measurement result, indicates the centering platform 220 to center the vehicle, and so on.

For example, the industrial computer 210 may determine, based on the motion track delivered by the vehicle cloud system 250, that the vehicle calibrates the CMS after calibrating the DMS, to control the vehicle to travel from the work station 1 to the work station 2. For example, after calibration of the DMS is completed, the in-vehicle infotainment system 241 may indicate, to the industrial computer 210, that the DMS has been successfully calibrated. In this way, the industrial computer 210 may send information about the work station 2 to the in-vehicle infotainment system 241, so that the in-vehicle infotainment system 241 controls the vehicle to travel from the work station 1 to the work station 2.

It should be understood that, for a process in which the industrial computer 313 obtains a wheel arch measurement result, adjusts the initial position based on the wheel arch measurement result, and indicates the centering platform 220 to center the vehicle in S313, refer to the foregoing process in S307. For brevity, details are not described herein again.

It should be understood that the foregoing embodiment is described by using an example in which the DMS and the CMS are calibrated at different work stations. If the DMS and the CMS are calibrated at a same work station, S313 may not be performed.

S314: The industrial computer 210 controls, based on the motion track, the mechanical arm to move, to calibrate the CMS.

In an embodiment, if the motion track information of the mechanical arm in S311 includes only the motion track information of the mechanical arm for calibration of the DMS, the method further includes: Before calibrating the CMS, the industrial computer 210 sends a third calibration start message to the in-vehicle infotainment system 241, where the third calibration start message includes vehicle type information. The in-vehicle infotainment system 241 sends a fourth calibration start message to the vehicle cloud system 250, where the third calibration start message includes the vehicle type information and the identification information of the CMS. The vehicle cloud system 250 generates motion track information of the mechanical arm for calibration of the CMS. The vehicle cloud system 250 sends, to the industrial computer 210 through the in-vehicle infotainment system 241, the motion track information of the mechanical arm for calibration of the CMS.

It should be understood that, for a process of calibrating the CMS in S314, refer to the process of calibrating the DMS in S312. For brevity, details are not described herein again.

After calibration of the DMS and calibration of the CMS are completed, the industrial computer 210 may further calibrate the HUD. For a specific calibration process, refer to the descriptions in the foregoing embodiment. Different from calibration of the DMS and the CMS, during calibration of the HUD, the camera can be mounted at an end of the mechanical arm. An image displayed by the HUD is photographed by using the camera, so that photographed image information is established in the vehicle coordinate system. In addition, parameters (for example, distortion, a field of view (field of view, FOV), and an eyebox specification) related to HUD imaging may be further calibrated by analyzing imaging effect of the HUD.

In this embodiment of this application, in a process of calibrating the to-be-calibrated device, the vehicle cloud system may automatically generate the motion track information of the mechanical arm based on the vehicle type information and the calibration task, and send the motion track information to the industrial computer. This helps improve automation during device calibration, and also helps reduce labor costs in a device calibration process. In addition, when an exception occurs in a calibration process (for example, when the to-be-calibrated device is a camera, the camera does not identify a complete calibration board at a path point of the mechanical arm), the in-vehicle infotainment system can automatically resolve the exception, and the exception does not need to be manually resolved, thereby further improving automation during device calibration.

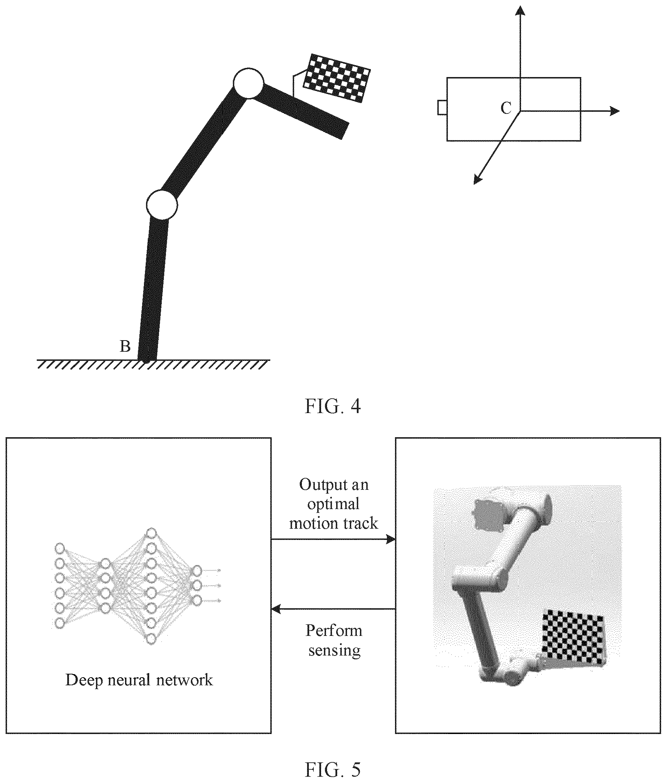

The foregoing describes a process of calibrating the camera in the vehicle cabin with reference to FIG. 3A and FIG. 3B. With reference to FIG. 4, the following describes a schematic diagram of a calibration principle according to an embodiment of this application. A visual perception feature of a cabin is established in a camera coordinate system in the cabin. When the visual perception feature needs to be fused with other perceptions, the visual perception feature needs to be calibrated in a vehicle coordinate system.

As shown in FIG. 4, a point B is a position at which a base of the mechanical arm is located, and a point C is an origin of the camera coordinate system. The industrial computer 210 may establish a conversion relationship between the origin C of the camera coordinate system and the base B by using the mechanical arm, and a relationship between the base B and the vehicle coordinate system is known. Therefore, a relationship between the origin C of the camera coordinate system and the vehicle coordinate system may be obtained through matrix transmission.

FIG. 5 is a schematic diagram of a calibration position learning system according to an embodiment of this application. The calibration position learning system may be located in the vehicle cloud system 250.

For example, the vehicle cloud system 250 may automatically generate, by using the learning system, a plurality of calibration positions (or calibration board movement points) of the mechanical arm in a vehicle model environment for calibration of the DMS. The vehicle cloud system 250 can ensure that, at each calibration position, the mechanical arm does not touch a vehicle window or interior accessories of the vehicle when the mechanical arm moves, and securely sends the calibration board to the calibration board movement points. The DMS can capture images including an image of the complete calibration board at each calibration board movement point.

In a calibration board movement point learning system, the following objects may be included but are not limited thereto:
(1) agent (agent), which means each joint node of the mechanical arm;
(2) action, performed by the agent and including moving up, down, left, and right;
(3) reward, which means a score obtained by the agent;
(4) environment, which means a vehicle model environment;
(5) state, which means a current state of the agent, such as a position of each joint node in the vehicle model; and
(6) goal, which means that the agent finally stops at a position to obtain maximized scores.

The purpose of the calibration board movement point learning system is to obtain maximized scores. A determining criterion for the score may be that each joint node of the mechanical arm does not touch the vehicle window and the interior accessories of the vehicle model when the mechanical arm moves up, down, left, and right, and the calibration board stays in a position within a field of view of the DMS.

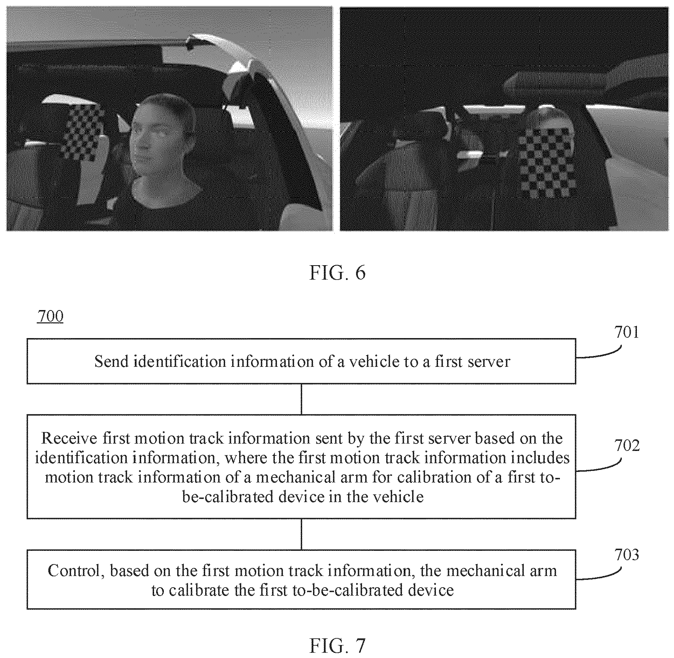

For example, FIG. 6 shows image information collected by a camera at different calibration board movement points according to an embodiment of this application. It can be learned that, at the two calibration board movement points, the camera inside the cabin may collect image information including the complete calibration board.

In this embodiment of this application, a motion track of the mechanical arm is automatically generated in the vehicle model environment based on the calibration position learning system, to replace a manner of obtaining a path of the mechanical arm through a plurality of manual placements and attempts, and achieve a goal in which the mechanical arm automatically and quickly moves to a required calibration position. This helps improve automation of device calibration, and also helps reduce labor and trial-and-error costs. In addition, because each path point on the motion track of the mechanical arm corresponds to a position of the calibration board, the calibration board may have high imaging quality on the camera at this position. This helps improve device calibration efficiency.

FIG. 7 is a schematic flowchart of a calibration method 700 according to an embodiment of this application. The method 700 may be performed by a calibration apparatus (for example, the foregoing industrial computer). As shown in FIG. 7, the method 700 may include:
S701: Send identification information of a vehicle to a first server.

Optionally, the method further includes: before the identification information of the vehicle is sent to the first server, requesting the identification information from the vehicle; and receiving the identification information sent by the vehicle.

Optionally, the identification information includes vehicle type information of the vehicle.

Optionally, the first server may store a correspondence between the identification information of the vehicle and the vehicle type information. In this way, the first server may determine the vehicle type information of the vehicle based on the identification information of the vehicle and the correspondence.

Optionally, the first server may be located in the foregoing vehicle cloud system 250.

S702: Receive first motion track information sent by the first server based on the identification information, where the first motion track information includes motion track information of a mechanical arm for calibration of a first to-be-calibrated device in the vehicle.

Optionally, the first to-be-calibrated device includes a camera, a head-up display, a radar, or the like.

Optionally, the motion track information of the mechanical arm may be generated by the first server in advance. For example, the first server may store motion track information of a mechanical arm for calibration of a to-be-calibrated device in different vehicle types. Table 4 shows a correspondence between to-be-calibrated devices and motion tracks of a mechanical arm in each vehicle type that is stored in the first server.

**Table 4**

| Vehicle type | To-be-calibrated device | Motion track of a mechanical arm |
|---|---|---|
| Vehicle type 1 | DMS | Motion track 1 |
| | CMS | Motion track 2 |
| | HUD | Motion track 3 |
| | ... | ... |
| Vehicle type 2 | DMS | Motion track 4 |
| | CMS | Motion track 5 |
| | HUD | Motion track 6 |
| | ... | ... |
| ... | ... | ... |

For example, if the identification information is information about the vehicle type 1, the first server may send, to the industrial computer, motion track information of the mechanical arm for calibration of each of a plurality of to-be-calibrated devices in the vehicle type 1, for example, information about the motion track 1 for calibration of the DMS, information about the motion track 2 for calibration of the CMS, and information about the motion track 3 for calibration of the HUD.

Optionally, the method further includes: controlling the vehicle to travel to a first work station, where the first work station is a work station at which the first to-be-calibrated device is calibrated.

For example, the industrial computer may plan a traveling track from a current position of the vehicle to the first work station for the vehicle, and send the traveling track to the vehicle. In this way, with the use of an automatic driving capability, the vehicle moves to the first work station by using the traveling track information.

For example, the industrial computer may send the current position of the vehicle and information about the first work station to a second server, so that the second server plans a traveling track from the current position of the vehicle to the first work station for the vehicle. The second server may send a planned traveling track to the industrial computer, so that the industrial computer controls the vehicle to travel from the current position to the first work station.

Optionally, the second server may be located in the foregoing vehicle cloud system 250.

Optionally, the method further includes: sending information about a plurality of to-be-calibrated devices to a second server, where the plurality of to-be-calibrated devices include the first to-be-calibrated device; and receiving traveling track information sent by the second server, where the traveling track information includes track information for traveling of the vehicle between a plurality of work stations, and the plurality of work stations include the first work station. The controlling the vehicle to travel to a first work station includes: controlling, based on the traveling track information, the vehicle to travel to the first work station.

For example, when there are a plurality of to-be-calibrated devices (for example, a DMS, a CMS, and an HUD) in the vehicle, the industrial computer may send identification information of the plurality of to-be-calibrated devices to the vehicle. The vehicle may send the identification information of the plurality of to-be-calibrated devices to the second server, so that the second server plans, for the vehicle, a motion track for traveling of the vehicle between the plurality of work stations. It should be understood that, that the second server plans, for the vehicle, a motion track for traveling of the vehicle between the plurality of work stations may also be understood as that the second server determines a sequence of calibrating the plurality of to-be-calibrated devices, or may be understood as that the second server determines a sequence of moving of the vehicle between the plurality of work stations.

The second server may send a planned motion track to the vehicle, and the vehicle may locally store the motion track. In this way, the vehicle may learn of a sequence of calibrating the plurality of to-be-calibrated devices. In addition, the vehicle may send the motion track to the industrial computer, so that the industrial computer controls the vehicle to move between the plurality of work stations. For example, if the first to-be-calibrated device is the DMS, the industrial computer may control, based on the correspondence shown in Table 1, the vehicle to move to the work station 1.

Optionally, the industrial computer may send the identification information (for example, information about the vehicle type 1) of the vehicle to the vehicle. After the vehicle receives the information about the vehicle type 1, because the vehicle stores the sequence of calibrating the plurality of to-be-calibrated devices, the vehicle may learn that the DMS is currently calibrated. In this way, the vehicle may send the information about the vehicle type 1 and identification information of the DMS to the first server. The first server may send, to the vehicle, information about the motion track 1 for calibration of the DMS. In this way, the vehicle may send the information about the motion track 1 to the industrial computer.

Optionally, the sending identification information of a vehicle to a first server includes: The industrial computer sends the identification information of the vehicle and identification information of the first to-be-calibrated device to the first server. Alternatively, the industrial computer may directly communicate with the first server, without communicating with the first server through the vehicle.

Optionally, the second server may be located in the foregoing vehicle cloud system 250.

S703: Control, based on the first motion track information, the mechanical arm to calibrate the first to-be-calibrated device.

Optionally, the method further includes: receiving second motion track information sent by the first server when calibration of the first to-be-calibrated device is completed, where the second motion track information includes motion track information of the mechanical arm for calibration of a second to-be-calibrated device in the vehicle; and controlling, based on the second motion track information, the mechanical arm to calibrate the second to-be-calibrated device.

Optionally, the method further includes: handling an exception when the exception occurs in a process of calibrating the first to-be-calibrated device.

In this embodiment of this application, if an exception occurs in a process of calibrating the first to-be-calibrated device, the industrial computer and the vehicle may resolve the exception.

For example, the first to-be-calibrated device is a camera, and a calibration board is disposed at an end of the mechanical arm. After the industrial computer controls the mechanical arm to move to a calibration position, the industrial computer may indicate an in-vehicle infotainment system to control the camera to capture an image of the calibration board at the end of the mechanical arm. After receiving the indication, the in-vehicle infotainment system may control the camera to start. If the in-vehicle infotainment system has not received, within preset duration, the startup success information sent by the camera, the in-vehicle infotainment system may determine that the camera fails to start. In this way, the in-vehicle infotainment system may continue to control the camera to start until the in-vehicle infotainment system receives the startup success information sent by the camera.

For example, the first to-be-calibrated device is the camera, a calibration board is disposed at an end of the mechanical arm, image information collected by the camera when the mechanical arm is at a first calibration position is first image information, the first motion track information includes the first calibration position, and the handling an exception when the exception occurs in a process of calibrating the first to-be-calibrated device includes: when the first image information does not include a complete image of the calibration board, receiving an offset of the calibration board sent by the vehicle; and controlling, based on the offset, the mechanical arm to be adjusted from the first calibration position to a second calibration position.

After the industrial computer controls the mechanical arm to move to the first calibration position, the industrial computer may indicate the in-vehicle infotainment system to control the camera to capture an image of the calibration board at the end of the mechanical arm at the first calibration position. If the in-vehicle infotainment system determines, by using the first image information collected by the camera, that the first image information does not include the complete image of the calibration board, the in-vehicle infotainment system may determine the offset of the calibration board based on the first image information, and send the offset to the industrial computer. The industrial computer may control, based on the offset, the mechanical arm to be adjusted from the first calibration position to the second calibration position. After the mechanical arm is adjusted to the second calibration position, the industrial computer may continue to indicate the in-vehicle infotainment system to control the camera to capture an image of the calibration board at the end of the mechanical arm at the second calibration position.

For example, the first to-be-calibrated device is the camera, and the exception that occurs in the process of calibrating the first to-be-calibrated device further includes: when the vehicle determines, based on a calibration result, that a calibration error is not within a preset error range, sending indication information to the industrial computer, where the indication information indicates the industrial computer to re-calibrate the camera.

For example, the first to-be-calibrated device is a head-up display, a camera is disposed at an end of the mechanical arm, image information collected by the camera at a third calibration position is second image information, the first motion track information includes the third calibration position, and the handling an exception when the exception occurs in a process of calibrating the first to-be-calibrated device includes: when the second image information does not include a complete image displayed by the head-up display, controlling, based on the second image information, the mechanical arm to be adjusted from the third calibration position to a fourth calibration position.

After the industrial computer controls the mechanical arm to move to the third calibration position, the industrial computer may control the camera to capture an image displayed by the head-up display. If the industrial computer determines that the second image information collected by the camera does not include the complete image displayed by the head-up display, the industrial computer may control, based on the second image information, the mechanical arm to move from the third calibration position to the fourth calibration position. After the mechanical arm moves to the fourth calibration position, the industrial computer may continue to capture, by using the camera, the image displayed by the head-up display.

It should be understood that, in this embodiment of this application, the head-up display may be calibrated in the industrial computer, or may be calibrated in the vehicle. For example, after obtaining, by using the camera, the complete image displayed by the head-up display, the industrial computer establishes, in a vehicle coordinate system by using a calibration algorithm, the image photographed by the camera. In addition, parameters (for example, distortion, an FOV, and an eyebox specification) related to HUD imaging may be further calibrated by analyzing imaging effect of the HUD. For another example, the industrial computer may send, to the vehicle, the complete image that is obtained by the camera and that is displayed by the head-up display, so that the vehicle may establish, in the vehicle coordinate system by using the calibration algorithm, the image photographed by the camera.

Optionally, the method further includes: before the first to-be-calibrated device is calibrated, controlling the mechanical arm to move to a first initial position; obtaining a wheel arch measurement result of the vehicle; and controlling, based on the wheel arch measurement result, the mechanical arm to be adjusted from the first initial position to a second initial position.

Optionally, the controlling the mechanical arm to move to a first initial position includes: obtaining the first initial position based on vehicle type information of the vehicle; and controlling the mechanical arm to move to the first initial position.

Optionally, before calibrating the first to-be-calibrated device, the industrial computer may obtain, from the first server, information about an initial position of the mechanical arm in different vehicle types. In this way, during calibration of the first to-be-calibrated device, the industrial computer may determine the first initial position based on vehicle type information of a current vehicle.

Optionally, before calibrating the first to-be-calibrated device, the industrial computer may request, from the first server, information about an initial position corresponding to the vehicle type. The first server may send information about the first initial position to the industrial computer, so that the industrial computer may control the mechanical arm to move to the first initial position.

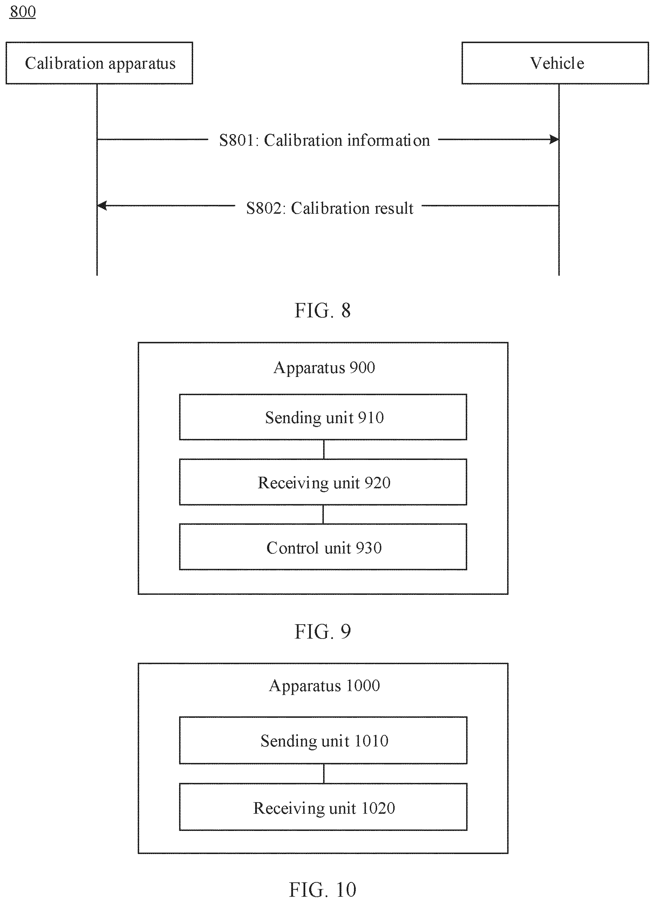

FIG. 8 is a schematic flowchart of a calibration method 800 according to an embodiment of this application. The method may be performed by a calibration apparatus and a vehicle. The method 800 includes:
S801: The calibration apparatus sends calibration information to the vehicle, where the calibration information is used to calibrate one or more to-be-calibrated devices in the vehicle.

Optionally, the method 800 further includes: before the calibration apparatus sends the calibration information to the vehicle, the calibration apparatus establishes a communication connection with the vehicle.

Optionally, the calibration information includes information about one or more work stations, where the one or more work stations are work stations at which the one or more to-be-calibrated devices are calibrated. In this way, after the vehicle receives the information about the one or more work stations, it may be learned that a sequence of traveling of the vehicle between the one or more work stations, so that with the use of an automatic driving capability of the vehicle, the vehicle is controlled to travel between the one or more work stations.

For example, the calibration information may carry information about a sequence of a plurality of work stations. For example, the calibration information may carry information about a work station 1, a work station 2, and a work station 3. In this way, the vehicle may learn that the vehicle needs to travel between the work station 1, the work station 2, and the work station 3 in sequence.

For example, the calibration information may further carry information about a work station. For example, the calibration information may carry information about the work station 1. In this way, the vehicle may learn that the vehicle needs to travel to the work station 1, so that with the use of the automatic driving capability of the vehicle, the vehicle is controlled to travel to the work station 1. After the calibration task is completed at the work station 1, the vehicle may indicate, to the calibration apparatus, that the vehicle has completed the calibration task at the work station 1. In this way, the calibration apparatus may continue to send information about a next work station (for example, the work station 2) to the vehicle.

Optionally, the calibration information may further carry identification information of the one or more to-be-calibrated devices. For example, the calibration information may carry identification information of a DMS. In this way, after receiving the identification information of the DMS, the vehicle may control the DMS to start. For another example, the calibration information may carry identification information of an HUD. In this way, after receiving the identification information of the HUD, the vehicle may control the HUD to display an image.

Optionally, the vehicle may store a correspondence between identification information of to-be-calibrated devices and work stations. After the vehicle receives the identification information of the one or more to-be-calibrated devices, the vehicle may be controlled, based on the identification information of the one or more to-be-calibrated devices and the correspondence, to travel to each work station in sequence and start calibration of a corresponding to-be-calibrated device. For example, when only the DMS is calibrated at the work station 1, the calibration information may carry the identification information of the DMS or the information about the work station 1. In this way, the vehicle may learn, based on the correspondence, that the vehicle needs to travel to the work station 1 and calibrate the DMS.

Optionally, the calibration information may include identification information of a first to-be-calibrated device and information about a first work station. In this way, after the vehicle receives the calibration information, it may be determined that the vehicle needs to travel to the first work station and calibrate the first to-be-calibrated device at the first work station. In this way, the vehicle may travel from a current position to the first work station based on the calibration information, and start calibration of the first to-be-calibrated device.

For example, the calibration information may carry the identification information of the DMS and the information about the work station 1. After the vehicle receives the calibration information, the vehicle may be controlled to travel to the work station 1 and start the DMS to collect image information, to complete calibration of the DMS based on collected image information.

For another example, the calibration information may carry the identification information of the HUD and the information about the work station 2. After the vehicle receives the calibration information, the vehicle may be controlled to travel to the work station 2 and control the HUD to display an image. After the vehicle controls the HUD to display an image, the vehicle may further indicate the calibration apparatus to capture the image displayed by the HUD, so that the calibration apparatus can calibrate the HUD based on a captured image. Alternatively, the calibration apparatus may send the captured image to the vehicle, so that the vehicle completes calibration of the HUD.

Optionally, when a plurality of to-be-calibrated devices are calibrated at a work station, the calibration information may carry information about the work station and identification information of the to-be-calibrated devices. For example, the DMS and the CMS may be calibrated at the work station 1, and the calibration information may carry the information about the work station 1 and the identification information of the DMS. After the vehicle receives the information about the work station 1 and the identification information of the DMS, the vehicle may be controlled to travel to the work station 1 and start the DMS. After the DMS is successfully calibrated, the calibration apparatus may continue to send the identification information of the CMS to the vehicle, so that the vehicle can control the CMS to start.

For another example, the DMS and the CMS may be calibrated at the work station 1, and the calibration information may carry the information about the work station 1 and the identification information of the DMS and the CMS. After the vehicle receives the information about the work station 1 and the identification information of the DMS and the CMS, the vehicle may be controlled to travel to the work station 1, and first calibrate the DMS and then calibrate the CMS at the work station 1. The vehicle may first start the DMS to calibrate the DMS. After the DMS is successfully calibrated, the vehicle may indicate, to the calibration apparatus, that the DMS is successfully calibrated, and the vehicle may start the CMS to start calibration of the CMS.

Optionally, when the DMS and the CMS may be calibrated at the work station 1, the calibration information sent by the calibration apparatus to the vehicle may include a field 1, a field 2, and a field 3. The field 1 indicates information about a work station, the field 2 indicates identification information of the first calibration device at the work station, and the field 3 indicates identification information of the second calibration device at the work station. For example, the field 1 may indicate the information about the work station 1, the field 2 may indicate the identification information of the DMS, and the field 3 may indicate the identification information of the CMS. In this way, the vehicle may learn that the vehicle needs to travel to the work station 1, and first calibrate the DMS and then calibrate the CMS at the work station 1.

For another example, the HUD and a central control screen may be calibrated at the work station 2. After the CMS is successfully calibrated, the calibration apparatus may send the information about the work station 2 and the identification information of the HUD to the vehicle. After the vehicle receives the information about the work station 2 and the identification information of the HUD, the vehicle may be controlled to travel to the work station 2 and start the HUD to display an image. After the HUD is successful calibrated, the calibration apparatus may continue to send the identification information of the central control screen to the vehicle, so that calibration of the central control screen may be started.

S802: The vehicle sends a calibration result of the one or more to-be-calibrated devices to the calibration apparatus.

Optionally, the calibration apparatus includes a display screen. If the calibration result indicates that the one or more to-be-calibrated devices are successfully calibrated, the calibration apparatus may display prompt information by using the display screen, to prompt the user that the one or more to-be-calibrated devices are successfully calibrated.

Optionally, the calibration apparatus includes a voice module. The calibration result indicates that the one or more to-be-calibrated devices are successfully calibrated. The calibration apparatus may prompt, by using a voice signal sent by the voice module, the user that the one or more to-be-calibrated devices are successfully calibrated.

Optionally, if the calibration information in S801 is used to calibrate the first to-be-calibrated device, after the first to-be-calibrated device is successfully calibrated, the vehicle may send a calibration result of the first to-be-calibrated device to the calibration apparatus.

Optionally, if the calibration information in S801 is used to calibrate a plurality of to-be-calibrated devices, after each of the plurality of to-be-calibrated devices is successfully calibrated, the vehicle may send a calibration result of each calibration device to the calibration apparatus.

Optionally, the one or more to-be-calibrated devices include a camera. The method further includes: If the camera fails to be calibrated, the vehicle sends indication information to the calibration apparatus, where the indication information indicates to re-calibrate the camera. In this way, after receiving the indication information, the calibration apparatus may restart calibration of the camera.

An embodiment of this application further provides an apparatus configured to implement any one of the foregoing methods. For example, an apparatus is provided and includes units (or means) configured to implement steps performed by a transportation means in any one of the foregoing methods.

FIG. 9 is a schematic block diagram of a calibration apparatus 900 according to an embodiment of this application. The apparatus 900 includes: a sending unit 910, configured to send identification information of a vehicle to a first server; a receiving unit 920, configured to receive first motion track information sent by the first server based on the identification information, where the first motion track information includes motion track information of a mechanical arm for calibration of a first to-be-calibrated device in the vehicle; and a control unit 930, configured to control, based on the first motion track information, the mechanical arm to calibrate the first to-be-calibrated device.

Optionally, the receiving unit 920 is further configured to receive second motion track information sent by the first server when calibration of the first to-be-calibrated device is completed, where the second motion track information includes motion track information of the mechanical arm for calibration of the second to-be-calibrated device in the vehicle. The control unit 930 is further configured to control, based on the second motion track information, the mechanical arm to calibrate the second to-be-calibrated device.

Optionally, the control unit 930 is further configured to control the vehicle to travel to a first work station, where the first work station is a work station at which the first to-be-calibrated device is calibrated.

Optionally, the sending unit 910 is further configured to send information about a plurality of to-be-calibrated devices to a second server, where the plurality of to-be-calibrated devices include the first to-be-calibrated device. The receiving unit 920 is further configured to receive traveling track information sent by the second server, where the traveling track information includes track information for traveling of the vehicle between a plurality of work stations, and the plurality of work stations include the first work station. The control unit 930 is specifically configured to control, based on the traveling track information, the vehicle to travel to the first work station.

Optionally, the first to-be-calibrated device includes a camera, a head-up display, or a radar.

Optionally, the apparatus 900 further includes an exception handling unit, configured to handle an exception when the exception occurs in a process of calibrating the first to-be-calibrated device.

Optionally, the first to-be-calibrated device is the camera, a calibration board is disposed at an end of the mechanical arm, image information collected by the camera when the mechanical arm is at a first calibration position is first image information, and the first motion track information includes the first calibration position. The receiving unit is further configured to: when the first image information does not include a complete image of the calibration board, receive an offset of the calibration board sent by the vehicle. The exception handling unit is specifically configured to control, based on the offset, the mechanical arm to be adjusted from the first calibration position to a second calibration position.

Optionally, the first to-be-calibrated device is the head-up display, a camera is disposed at an end of the mechanical arm, image information collected by the camera at a third calibration position is second image information, the first motion track information includes the third calibration position. The exception handling unit is specifically configured to: when the second image information does not include a complete image displayed by the head-up display, control, based on the second image information, the mechanical arm to be adjusted from the third calibration position to a fourth calibration position.

Optionally, the apparatus further includes an obtaining unit. The control unit is further configured to: before the first to-be-calibrated device is calibrated, control the mechanical arm to move to a first initial position. The obtaining unit is configured to obtain a wheel arch measurement result of the vehicle. The control unit 930 is further configured to control, based on the wheel arch measurement result, the mechanical arm to be adjusted from the first initial position to a second initial position.

Optionally, the sending unit 910 is further configured to: before sending the identification information of the vehicle to the first server, send request information to the vehicle, where the request information is used to request the identification information. The receiving unit 920 is further configured to receive the identification information sent by the vehicle.

Optionally, the identification information includes vehicle type information of the vehicle.

FIG. 10 is a schematic block diagram of a calibration apparatus 1000 according to an embodiment of this application. The apparatus 1000 includes: a sending unit 1010, configured to send a calibration message to a vehicle, where the calibration message is used to calibrate one or more to-be-calibrated devices in the vehicle; and a receiving unit 1020, configured to receive a calibration result of the one or more to-be-calibrated devices sent by the vehicle.

Optionally, the calibration message includes information about one or more work stations, where the one or more work stations are work stations at which the one or more to-be-calibrated devices are calibrated.

Optionally, the calibration message includes identification information of the one or more to-be-calibrated devices.

Optionally, the one or more to-be-calibrated devices include a camera. The receiving unit is further configured to: when the camera fails to be calibrated, receive indication information sent by the vehicle, where the indication information indicates to re-calibrate the camera.

Optionally, the apparatus 1000 includes: a prompting unit, configured to prompt a user with the calibration result of the one or more to-be-calibrated devices.

It should be understood that division of units in the apparatus is merely logical function division. During actual implementation, all or some of the units may be integrated into one physical entity or may be physically separated. In addition, a unit in the apparatus may be implemented in a form of software invoked by a processor. For example, the apparatus includes a processor. The processor is connected to a memory, the memory stores instructions, and the processor invokes the instructions stored in the memory, to implement any one of the foregoing methods or functions of units in the apparatus. The processor is, for example, a general-purpose processor, such as a CPU or a microprocessor. The memory is a memory inside the apparatus or a memory outside the apparatus. Alternatively, the units in the apparatus may be implemented in a form of a hardware circuit, and functions of some or all units may be implemented by designing the hardware circuit. The hardware circuit may be understood as one or more processors. For example, in an implementation, the hardware circuit is an ASIC, and functions of some or all units are implemented by designing a logical relationship between elements in the circuit. For another example, in another implementation, the hardware circuit may be implemented by using a PLD. An FPGA is used as an example. The FPGA may include a large quantity of logic gate circuits, and a connection relationship between the logic gate circuits is configured by using a configuration file, to implement functions of some or all of the foregoing units. All the units of the foregoing apparatus may be implemented in a form of software invoked by a processor, or may be implemented in a form of a hardware circuit, or some of the units are implemented in a form of software invoked by a processor, and the remaining units are implemented in a form of a hardware circuit.

In this embodiment of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function by using a logical relationship of a hardware circuit, and the logical relationship of the hardware circuit is fixed or reconfigurable. For example, the processor is a hardware circuit implemented by an ASIC or a PLD, for example, an FPGA. In a reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, an NPU, a TPU, or a DPU.

It can be learned that the units in the foregoing apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, these units are integrated together and implemented in a form of a system-on-a-chip (system-on-a-chip, SOC). The SOC may include at least one processor, configured to implement any one of the foregoing methods or implement functions of units of the apparatus. Types of the at least one processor may be different. For example, the at least one processor includes a CPU, an FPGA, a CPU, an artificial intelligence processor, a CPU and a GPU.

An embodiment of this application further provides an apparatus. The apparatus includes a processing unit and a storage unit. The storage unit is configured to store instructions, and the processing unit executes the instructions stored in the storage unit, so that the apparatus performs the methods or steps performed by the calibration apparatus (for example, an industrial computer) in the foregoing embodiments.

An embodiment of this application further provides an industrial computer. The industrial computer may include the apparatus 900 or the apparatus 1000.

An embodiment of this application further provides an apparatus. The apparatus includes a processing unit and a storage unit. The storage unit is configured to store instructions, and the processing unit executes the instructions stored in the storage unit, so that the apparatus performs the method or steps performed by the vehicle in the foregoing embodiments.

An embodiment of this application further provides a computer program product. The computer program product includes computer program code. When the computer program code is run on a computer, the computer is enabled to perform the methods.

An embodiment of this application further provides a computer-readable medium. The computer-readable medium stores program code. When the computer program code is run on a computer, the computer is enabled to perform the methods.

In an implementation process, steps in the foregoing methods can be implemented by using a hardware integrated logical circuit in the processor, or by using instructions in a form of software. The method disclosed with reference to embodiments of this application may be directly presented as being performed and completed by a hardware processor, or performed and completed by a combination of hardware and software modules in a processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and performs the steps in the foregoing methods in combination with hardware of the processor. To avoid repetition, details are not described herein.

It should be understood that, in this embodiment of this application, the memory may include a read-only memory and a random access memory and provide instructions and data for the processor.

It should be further understood that sequence numbers of the processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A skilled person may use different methods for particular applications to implement the described functions, but this implementation should not be considered as beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the function is implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A calibration method, comprising:
sending identification information of a vehicle to a first server;
receiving first motion track information sent by the first server based on the identification information, wherein the first motion track information comprises motion track information of a mechanical arm for calibration of a first to-be-calibrated device in the vehicle; and
controlling, based on the first motion track information, the mechanical arm to calibrate the first to-be-calibrated device.

2. The method according to claim 1, wherein the method further comprises:
receiving second motion track information sent by the first server when calibration of the first to-be-calibrated device is completed, wherein the second motion track information comprises motion track information of the mechanical arm for calibration of a second to-be-calibrated device in the vehicle; and
controlling, based on the second motion track information, the mechanical arm to calibrate the second to-be-calibrated device.

3. The method according to claim 1 or 2, wherein the method further comprises:
controlling the vehicle to travel to a first work station, wherein the first work station is a work station at which the first to-be-calibrated device is calibrated.

4. The method according to claim 3, wherein the method further comprises:
sending information about a plurality of to-be-calibrated devices to a second server, wherein the plurality of to-be-calibrated devices comprise the first to-be-calibrated device; and
receiving traveling track information sent by the second server, wherein the traveling track information comprises track information for traveling of the vehicle between a plurality of work stations, and the plurality of work stations comprise the first work station; and
the controlling the vehicle to travel to a first work station comprises:
controlling, based on the traveling track information, the vehicle to travel to the first work station.

5. The method according to any one of claims 1 to 4, wherein the first to-be-calibrated device comprises a camera, a head-up display, or a radar.

6. The method according to any one of claims 1 to 5, wherein the method further comprises:
handling an exception when the exception occurs in a process of calibrating the first to-be-calibrated device.

7. The method according to claim 6, wherein the first to-be-calibrated device is the camera, a calibration board is disposed at an end of the mechanical arm, image information collected by the camera when the mechanical arm is at a first calibration position is first image information, the first motion track information comprises the first calibration position, and the handling an exception when the exception occurs in a process of calibrating the first to-be-calibrated device comprises:
when the first image information does not comprise a complete image of the calibration board, receiving an offset of the calibration board sent by the vehicle; and
controlling, based on the offset, the mechanical arm to be adjusted from the first calibration position to a second calibration position.

8. The method according to claim 6, wherein the first to-be-calibrated device is the head-up display, a camera is disposed at an end of the mechanical arm, image information collected by the camera at a third calibration position is second image information, the first motion track information comprises the third calibration position, and the handling an exception when the exception occurs in a process of calibrating the first to-be-calibrated device comprises:
when the second image information does not comprise a complete image displayed by the head-up display, controlling, based on the second image information, the mechanical arm to be adjusted from the third calibration position to a fourth calibration position.

9. The method according to any one of claims 1 to 8, wherein the method further comprises:
before the first to-be-calibrated device is calibrated, controlling the mechanical arm to move to a first initial position;
obtaining a wheel arch measurement result of the vehicle; and
controlling, based on the wheel arch measurement result, the mechanical arm to be adjusted from the first initial position to a second initial position.

10. The method according to any one of claims 1 to 9, wherein the method further comprises:
before the identification information of the vehicle is sent to the first server, requesting the identification information from the vehicle; and
receiving the identification information sent by the vehicle.

11. The method according to any one of claims 1 to 10, wherein the identification information comprises vehicle type information of the vehicle.

12. A calibration method, comprising:
sending calibration information to a vehicle, wherein the calibration information is used to calibrate one or more to-be-calibrated devices in the vehicle; and
receiving a calibration result of the one or more to-be-calibrated devices sent by the vehicle.

13. The method according to claim 12, wherein the calibration information comprises information about one or more work stations, wherein the one or more work stations are work stations at which the one or more to-be-calibrated devices are calibrated.

14. The method according to claim 12 or 13, wherein the calibration information comprises identification information of the one or more to-be-calibrated devices.

15. The method according to any one of claims 12 to 14, wherein the one or more to-be-calibrated devices comprise a camera, and the method further comprises:
when the camera fails to be calibrated, receiving indication information sent by the vehicle, wherein the indication information indicates to re-calibrate the camera.

16. The method according to any one of claims 12 to 15, wherein the method further comprises:
prompting a user with the calibration result of the one or more to-be-calibrated devices.

17. A calibration apparatus, comprising:
a sending unit, configured to send identification information of a vehicle to a first server;
a receiving unit, configured to receive first motion track information sent by the first server based on the identification information, wherein the first motion track information comprises motion track information of a mechanical arm for calibration of a first to-be-calibrated device in the vehicle; and
a control unit, configured to control, based on the first motion track information, the mechanical arm to calibrate the first to-be-calibrated device.

18. The apparatus according to claim 17, wherein
the receiving unit is further configured to receive second motion track information sent by the first server when calibration of the first to-be-calibrated device is completed, wherein the second motion track information comprises motion track information of the mechanical arm for calibration of a second to-be-calibrated device in the vehicle; and
the control unit is further configured to control, based on the second motion track information, the mechanical arm to calibrate the second to-be-calibrated device.

19. The apparatus according to claim 17 or 18, wherein
the control unit is further configured to control the vehicle to travel to a first work station, wherein the first work station is a work station at which the first to-be-calibrated device is calibrated.

20. The apparatus according to claim 19, wherein
the sending unit is further configured to send information about a plurality of to-be-calibrated devices to a second server, wherein the plurality of to-be-calibrated devices comprise the first to-be-calibrated device;
the receiving unit is further configured to receive traveling track information sent by the second server, wherein the traveling track information comprises track information for traveling of the vehicle between a plurality of work stations, and the plurality of work stations comprise the first work station; and
the control unit is specifically configured to control, based on the traveling track information, the vehicle to travel to the first work station.

21. The apparatus according to any one of claims 17 to 20, wherein the first to-be-calibrated device comprises a camera, a head-up display, or a radar.

22. The apparatus according to any one of claims 17 to 21, wherein the apparatus further comprises:
an exception handling unit, configured to handle an exception when the exception occurs in a process of calibrating the first to-be-calibrated device.

23. The apparatus according to claim 22, wherein the first to-be-calibrated device is the camera, a calibration board is disposed at an end of the mechanical arm, image information collected by the camera when the mechanical arm is at a first calibration position is first image information, and the first motion track information comprises the first calibration position;
the receiving unit is further configured to: when the first image information does not comprise a complete image of the calibration board, receive an offset of the calibration board sent by the vehicle; and
the exception handling unit is specifically configured to control, based on the offset, the mechanical arm to be adjusted from the first calibration position to a second calibration position.

24. The apparatus according to claim 22, wherein the first to-be-calibrated device is the head-up display, a camera is disposed at an end of the mechanical arm, image information collected by the camera at a third calibration position is second image information, and the first motion track information comprises the third calibration position; and
the exception handling unit is specifically configured to: when the second image information does not comprise a complete image displayed by the head-up display, control, based on the second image information, the mechanical arm to be adjusted from the third calibration position to a fourth calibration position.

25. The apparatus according to any one of claims 17 to 24, wherein the apparatus further comprises an obtaining unit, wherein
the control unit is further configured to: before the first to-be-calibrated device is calibrated, control the mechanical arm to move to a first initial position;
the obtaining unit is configured to obtain a wheel arch measurement result of the vehicle; and
the control unit is further configured to control, based on the wheel arch measurement result, the mechanical arm to be adjusted from the first initial position to a second initial position.

26. The apparatus according to any one of claims 17 to 25, wherein
the sending unit is further configured to: before sending the identification information of the vehicle to the first server, send request information to the vehicle, wherein the request information is used to request the identification information; and
the receiving unit is further configured to receive the identification information sent by the vehicle.

27. The apparatus according to any one of claims 17 to 26, wherein the identification information comprises vehicle type information of the vehicle.

28. A calibration apparatus, comprising:
a sending unit, configured to send a calibration message to a vehicle, wherein the calibration message is used to calibrate one or more to-be-calibrated devices in the vehicle; and
a receiving unit, configured to receive a calibration result of the one or more to-be-calibrated devices sent by the vehicle.

29. The apparatus according to claim 28, wherein the calibration message comprises information about one or more work stations, wherein the one or more work stations are work stations at which the one or more to-be-calibrated devices are calibrated.

30. The apparatus according to claim 28 or 29, wherein the calibration message comprises identification information of the one or more to-be-calibrated devices.

31. The apparatus according to any one of claims 28 to 30, wherein the one or more to-be-calibrated devices comprise a camera, and the receiving unit is further configured to: when the camera fails to be calibrated, receive indication information sent by the vehicle, wherein the indication information indicates to re-calibrate the camera.

32. The apparatus according to any one of claims 28 to 31, wherein the apparatus further comprises:
a prompting unit, configured to prompt a user with the calibration result of the one or more to-be-calibrated devices.

33. A calibration apparatus, wherein the control apparatus comprises a processor and a memory, the memory is configured to store program instructions, and the processor is configured to invoke the program instructions to perform the method according to any one of claims 1 to 16.

34. An industrial computer, wherein the industrial computer comprises the apparatus according to any one of claims 17 to 33.

35. A computer-readable storage medium, wherein the computer-readable medium stores program code, and when the program code is run on a computer, the computer is enabled to perform the method according to any one of claims 1 to 16.

36. A chip, wherein the chip comprises a processor and a data interface, and the processor reads, through the data interface, instructions stored in a memory, to perform the method according to any one of claims 1 to 16.
